# EUROPEAN PATENT SPECIFICATION

(11) **EP 4 445 982 B1**
(45) Date of publication and mention of the grant of the patent: **04.03.2026**
(21) Application number: 24169666.5
(22) Date of filing: 11.04.2024
(51) Int. Cl.: B01D 29/44, B01D 29/58, B01D 29/64, B01D 29/90, B01D 36/02

(54) **FILTER DEVICE FOR REMOVING PARTICLES FROM A LIQUID**
FILTERVORRICHTUNG ZUM ENTFERNEN VON PARTIKELN AUS EINER FLÜSSIGKEIT
DISPOSITIF DE FILTRATION POUR ÉLIMINER DES PARTICULES D'UN LIQUIDE

(30) Priority: 13.04.2023 NL 2034564
(43) Date of publication of application: 16.10.2024
(73) Proprietor: MST NL B.V., 1273 Huizen (NL)
(72) Inventor: Van der Upwich, Stijn, 1273 NA HUIZEN (NL); Baars, Antonius Jozef Maria, 1273 NA HUIZEN (NL)
(74) Representative: Arnold & Siedsma

(56) References cited:
- EP-A1- 1 110 591
- WO-A1-2015/063777
- WO-A1-2020/254446
- US-A- 4 762 615

## Description

The present invention relates to a filter device for removing particles from a liquid, a cyclone filter comprising such a filter device and a method for filtering and a method for flushing a filter device.

Traditional filters typically comprise a membrane comprising a plurality of perforations of a certain size. A liquid or fluid to be filtered flows through the perforations, thereby trapping any particles suspended in the liquid that are larger than the perforations in the filter. A drawback of this method of filtration is that the particles removed from the liquid remain in the filter, thereby gradually clogging the filter and reducing the flow rate of liquid through the filter. In order to restore the flow rate of liquid through the filter, the filter can be replaced with a new filter. Alternatively, the filter can be cleaned. However, filter materials typically employed are made of materials that can deform, thereby entrapping particles in such a manner that cleaning the filter does not remove them. In addition, these materials can break down over time, reducing the possibility of repeatedly cleaning the filter. In addition, the deformable nature of typical materials that filters are made of has as a consequence that the size of the perforations in the filter is not stable, thereby allowing larger or smaller particles than desired to pass through the filter.

WO 2015/063777 A1 discloses a filtering device according to the preamble of claim 1, more specifically a disc filter including a stack of apertured filter discs arranged about an axis, the stack having an outer surface and an inner surface and being mounted such that during backflush, individual discs are rotatable relative to adjacent discs about the axis and a disc cleaning assembly operative to rotate at least some of the discs about the axis relative to others of the discs, the disc cleaning assembly including at least one first fluid conduit for producing at least one outer liquid jet directed generally tangentially into engagement with the outer surface of the stack for rotationally driving the at least some of the discs about the axis relative to others of the discs and at least one second fluid conduit for producing at least one inner backflushing liquid jet directed into engagement with the inner surface of the stack.

It is a goal of the present invention, next to other goals, to provide an improved filter device wherein at least one of the above mentioned problem is at least partly alleviated.

This goal, amongst other goals, is met by a filter device according to claim 1. More specifically, this goal, amongst other goals, is met by a filter device comprising a liquid inlet side and a filtered liquid outlet side, further characterized in that the filtering device comprises a plurality of lamellae, wherein the lamellae are moveable between a filtering position, wherein adjacent lamellae extend at a filtering distance for defining a filtering surface, and a flushing position wherein adjacent lamellae extend at a mutual distance larger than the filtering distance. By providing a filter device wherein the filtering surface is defined, at least in the filtering position, by a plurality of lamellae, a robust filter is provided which can also be efficiently flushed.

In the filtering position, the lamellae extend at a close, non-zero filtering distance to each other. The filtering distance defines the coarseness of the filter. Preferably, the filtering distance is at most the size of the smallest particle to be filtered out of the liquid. Thus, only particles smaller than the filtering distance may pass the filtering surface in the filtering position of the lamellae and larger particles are blocked. The filtering distance may be set between 0,6 - 0,1 mm, preferably between 0,4 - 0,15 mm and more preferably the filtering distance is approximately 0,2 mm.

By moving the lamellae apart to a distance larger than the filtering distance, when moving the lamellae to the flushing position, any lodged material can be flushed away. Flushing preferably takes place by inducing a flow of liquid from the filtered liquid outlet side to the inlet side, i.e., opposite the normal filtering direction, such that lodged particles can be flushed away.

The lamellae are preferably manufactured from a stiff and/or robust material such as metal or plastic. A robust filter device is thus obtained. Preferably, the lamellae comprise (stainless) steel lamellae.

The term lamellae as used herein is to be interpreted as a strip of material. Preferably, a lamellae has a length larger than, for instance more than two times, preferably more than 5 times, its width. The height of the lamella is substantially smaller than the height or width.

The lamellae can for instance be moved between the filtering and flushing positions by mutually moving the lamellae, for instance using a translating movement. Two adjacent lamellae can be moved together and apart for moving these lamellae between the positions.

In a preferred embodiment, the lamellae are moveable between the filtering position and the flushing position by rotating the lamellae, preferably around an axis substantially parallel to the surface of the lamella. A distance between neighbouring lamellae is then efficiently increased. More preferably, the lamellae are rotatable around a rotation axis parallel to the long edge of a lamella and more preferably the rotation axis extend on or close to the long edge of a lamella. A lamella can then be moved efficiently between the filtering position and the flushing position.

More preferably, a lamella is rotatable, for instance around a rotation axis on or near an edge thereof, from the flushing position to the filtering position in a direction having a component in the direction from the inlet side to the outlet side. Liquid flow in the direction from the inlet side to the outlet thus moves the lamellae to the filtering position. Preferably, the filtering device comprises stops or spacers for limiting the movement of the lamellae in the filtering position. Fluid flow from the inlet to the outlet then biases the lamellae onto the stops in the filtering position. Liquid flow from the opposite direction, thus from the outlet side to the inlet side, may then move the lamellae from the filtering to the flushing position. Generally, for moving the lamellae towards the flushing position, the lamellae are rotated towards the liquid inlet side.

Although the lamellae may be actively moved, for instance by rotation motors or the like, the lamellae are preferably freely pivotable or rotatable, wherein lamellae are moved between the filtering and flushing position by changing the direction of flow through the filtering surface.

To keep the lamellae at the filtering distance, the filtering device preferably comprises spacers to keep the lamellae at a mutual filtering distance to provide the filtering openings in the filtering surface. The filter and the spacers may be arranged to urge the lamellae to the spacers upon a flow of liquid from the inlet to the outlet side. The lamellae then extend at the filtering distance when liquid is fed from the inlet side.

An efficient filtering surface is obtained if, in the filtering position, adjacent lamellae partly overlap. In particular in combination with rotating lamellae as mentioned above, a first lamellae is rotated towards a second lamellae for moving to the filtering position, wherein the first lamella partly overlaps the second lamella. A flow of liquid from the inlet to the outlet may urge the first lamella to the second lamella.

Spacers are preferably provided to keep the partly overlapping lamellae at the filtering distance in the filtering position. Filtering openings or gaps are then defined between the two overlapping parts of the lamellae. The spacers may be formed on the lamellae to keep the mutual distance.

According to a preferred embodiment, the spacers comprise indentations in the lamellae with a depth corresponding to, or defining, the filtering distance. In this way, no additional components are required. The indentations are preferably formed by deforming the surface of the lamella by means of pressing or machining, or alternatively by other means.

Preferably, an indentation has a section offset from the surface of the lamella. The space between the offset section and the surface of an overlapping lamella may then define the filtering gap. More preferably, the offset section is substantially planar. The filtering gaps are then preferably substantially slot shaped. The filtering distance is then set efficiently, while increasing the flow capacity through the filtering gap, as compared to for instance a tubular or circular shaped filtering gap.

Preferably, a lamella has a first edge section provided with at least one indentation, preferably a plurality of indentations, and second, opposite edge section having a substantially planar, or at least smooth, surface without indentations. A first edge section of a first lamella then overlaps the second edge section of a second lamella in the filtering position.

The filtering device may be a substantially planar configuration, at least in the filtering position. The lamellae are then preferably rotatable for moving one edge of the lamellae from and towards said plane for moving between the flushing and the filtering position, respectively.

The filtering device is substantially cylindrical, wherein in the filtering position, the filtering surface is substantially cylindrical. Such a configuration can be efficiently incorporated in filtering systems, for instance a cyclone filter as will be explained in greater detail below. The lamellae are rotatable between the filtering position wherein the lamellae extend substantially parallel to the cylindrical surface and the flushing position wherein the lamellae are rotated in a direction radially outwards or inwards, dependent on the orientation of the inlet and outlet side.

Preferably, the liquid inlet side is located outside the cylindrical filtering surface and the liquid outlet side is located radially inward with respect to the cylindrical filtering surface. Filtered liquid thus flows to the inside of the cylindrical filter device.

In another preferred embodiment the filtering device comprises two end surfaces or end plates wherein the plurality of lamellae extend between the end surfaces for forming the cylindrical surface in the filtering position. The lamellae hereby, at least in the filtering position, close off the cylindrical filtering device by forming the cylindrical filtering surface. Preferably, an outlet is provided in at least one of the two end surfaces. The end surfaces establish a flow path wherein a fluid, or more specifically a liquid, flows from the outside of the volume enclosed by the filtering surface and end surfaces to the inside of this volume. The filtered liquid leaves the filtering device through the outlet. In the alternative, an inlet for unfiltered liquid is provided in at least one of the end surfaces.

Another preferred embodiment further comprises a plurality of rotation axles extending between the two end surfaces, wherein the lamellae are arranged to rotate about said rotation axles. Preferably the lamellae are rotatably attached to the rotation axles, for example by folding part of a lamella around a rotation axle. Alternatively, pins can be mounted on the lamellae, which mount in corresponding holes in the end surfaces. Preferably, the end surfaces and the rotation axles form a cage like structure.

According to another preferred embodiment, the filtering device further comprises a flushing device arranged to direct a flow of flushing fluid from the filtered liquid outlet side towards the lamellae. Although the outlet, as described above, can be used for this purpose by reversing the flow of liquid, it is preferred if a dedicated flushing device or inlet is provided. Liquid can then be provided via said device or inlet, without requiring coupling to the fluid outlet, which contains filtered liquid. Preferably, the flushing device comprises one or more nozzles to direct the flow of fluid. Preferably, the flushing fluid flows through the flushing device out of the one or more nozzles.

According to a preferred embodiment, the flushing device is movable with respect to the filtering surface, preferably movable along the filtering surface. This allows flushing any stuck particles, while at the same time moving the lamellae from the filtering position to the flushing position. By moving the flushing device, the one or more nozzles can move a plurality of lamellae. Preferably, the lamellae can be moved from the filtering position to the flushing position by the liquid supplied from the flushing device. Preferably, the pressure generated by the fluid flowing from the flushing device towards the lamellae moves the lamellae from the filtering position to the flushing position. Preferably, the fluid flow from the one or more flushing nozzles dislodges any particles stuck to the lamellae. Preferably, when the filtering surface is cylindrical, the flushing device is rotatably arranged in the cylindrical filtering device.

In another preferred embodiment, the one or more flushing nozzles are oriented in one or more directions having a component perpendicular to the radial direction of the cylindrical filtering surface. In other words, the flushing device comprises one or more nozzles oriented at an acute angle relative to a radial emanating from the centreline of the cylinder enclosed by the lamellae. If the nozzle is rotatable arranged within the cylindrical filtering surface, the oblique orientated nozzle will induce rotation, thereby moving the nozzle along the filtering surface.

The filtering device preferably compromises a flushing inlet coupled to the flushing device, wherein the flushing inlet is provided in at least one of the two end surfaces. Flushing liquid preferably enters the flushing device through the flushing inlet, and leaves the flushing device through the one or more nozzles. The flushing inlet may be arranged at the central axis of the cylindrical filtering surface. The flushing device may comprise a hollow member arranged rotatable around said central axis. The follow member may comprise the nozzle for directing the fluid from the flushing inlet towards the filtering surface, thereby dislodging any stuck particles and preferably hereby moving the lamellae from the filtering position to the flushing position. When the nozzles are indeed oriented to have a component perpendicular to the radial direction, a freely rotatable flushing device will automatically rotate when supplying liquid.

Another aspect relates to a cyclone filter for removing particles from a liquid, wherein the cyclone filter comprises a fluid chamber and an inlet for liquid, an outlet for filtered liquid and an outlet for particles, each coupled to the fluid chamber. The cyclone filter further preferably comprises a flow directing mechanism for inducing a vortex flow around a vortex axis in said fluid chamber. The fluid chamber preferably comprises a filtering device according to any of the embodiments described above. The centrifugal force introduced by the rotating motion of the liquid forces particles with a higher density than the liquid towards the outside of the cyclone filter. The liquid, including any remaining particles, then flows through the filtering surface of the lamellae filtering device according to any of the previous embodiments, thereby trapping any particles larger than the filtering gaps on the filtering surface, thereby removing them from the liquid.

An outlet for particles is preferably arranged radially outwardly with respect to the vortex axis as induced by the flow directing mechanism. Particles, such as dirt, will thus be urged towards the outlet for particles. This results in an efficient filtering process, which is furthermore not dependent on the orientation of the filter device as a whole. i.e. independent on the direction of gravity. It is noted that with the location of outlet in this context, the location where the outlet debouches in or connects to the fluid chamber is meant.

A suitable cyclone filter is described in international patent publication WO 2020/254446 A1.

In another preferred embodiment of the cyclone filter, all fluid inlets and outlets are additionally provided with valve means, to open or close the inlets and outlets.

The filtering surface of the filtering device is cylindrical as described above, wherein the liquid inlet side is around radially outwardly from the cylindrical filtering surface. A vortex is then preferably provided at the liquid inlet side of the cylindrical filtering device. The filtered liquid outlet side of the cylindrical filtering device is then arranged radially inwardly and corresponds to the outlet for filtered liquid of the cyclone filter. The cyclone filter preferably comprises an inlet for flushing liquid, which is preferably connected to the inlet for flushing liquid in the lamellae filter, and preferably further connected to the flushing device.

The lamellae filtering device is substantially cylindrical, wherein in the filtering position, the lamellae extend substantially parallel to the cylindrical surface, wherein the lamellae are rotatable from the filtering position to the flushing position in a direction opposite the vortex flow in said fluid chamber. Due to this orientation, the hydraulic or pneumatic force generated by the fluid flow retains the lamellae in the filtering position. Fluid flow from within the cylindrical filtering surface, for instance using the nozzle device as described above, may then move the lamellae to the flushing position. Stuck particles may then be flushed away and outputted via the outlet for particles as described above.

Another aspect relates to a method for filtering a liquid using a filtering device as described above, comprising inducing a liquid flow from the liquid inlet side to the filtered liquid outlet side. Preferably, the liquid flows through the filtering surface, thereby entrapping any particles larger than the filtering gaps in the filtering surface, thereby removing these particles from the liquid. Preferably, the lamellae are retained in the filtering position by the fluid flowing through the filtering device from the inlet side to the outlet side.

The method for flushing a filtering device as described above preferably further comprises the steps of moving the lamellae from the filtering position, wherein adjacent lamellae extend at the filtering distance for defining the filtering surface, to the flushing position wherein adjacent lamellae extend at a mutual distance larger than the filtering distance. The method further preferably comprises the step of inducing a liquid flow from the filtered liquid outlet side to the liquid inlet side.

In a method for flushing a filtering device as described above, the step of moving the lamellae from the filtering position to the flushing position preferably further comprises inducing the liquid flow from the filtered liquid outlet side to the liquid inlet side using a flushing device.

A method for flushing a cylindrical filtering device as described above, wherein in the filtering position, the filtering surface is substantially cylindrical and wherein the lamellae are rotatable between the filtering position wherein the lamellae extend substantially parallel to the cylindrical surface and the flushing position wherein the lamellae are rotated in a direction radially outwardly, preferably comprises the step of flushing the filtering device further comprises the step of rotating the flushing device.

The present invention is further elucidated with reference to the attached drawings, which show preferred embodiments of the filter and are not intended to limit the scope of the invention in any way, wherein:
- Figure 1 shows the cyclone filter device.
- Figure 2 shows the cyclone filter device of figure 1 with the lamellae filter and the flushing device in more detail .
- Figure 3 shows an example of a flow directing mechanism;
- Figure 4 schematically shows the working principle of the filter device;
- Figure 5 is a cross-sectional view along arrow V in figure 1;
- Figure 6 is a cross-sectional view along arrow VI in figure 1;
- Figure 7 shows a detail of the nozzle member of the lamellae filter;
- Figures 8 and 8 are perspective views of the lamellae filter in filtering and flushing position, respectively;
- Figures 10A and 10B are cross-sectional views of the lamellae filter in filtering an flushing position, taken lines XA, XB in figures 8 and 9, respectively.

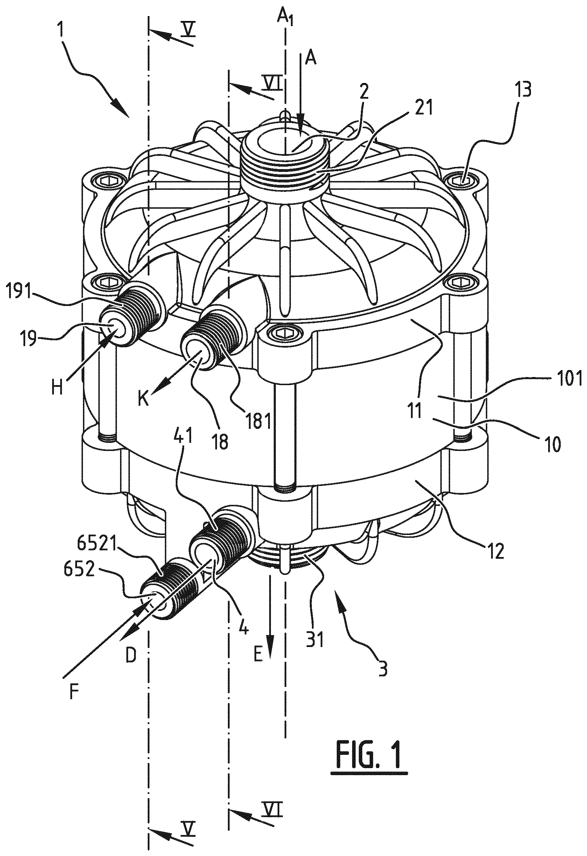

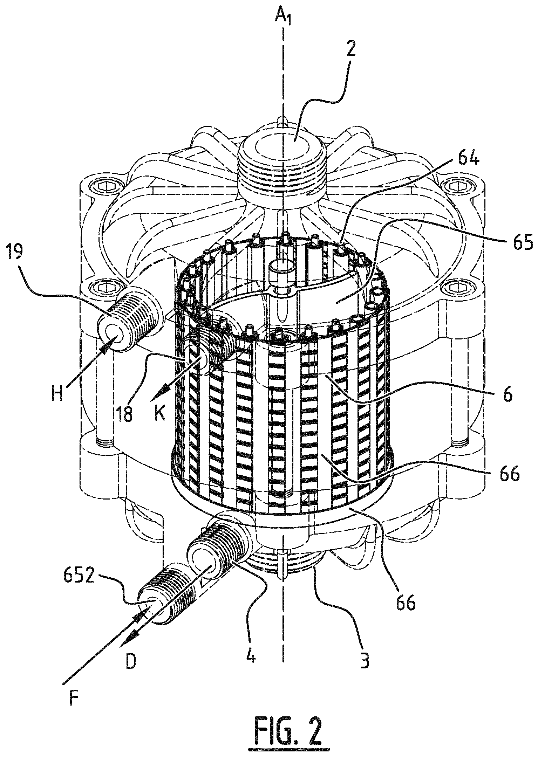

Figure 1 shows an embodiment of the cyclone filter device 1 provided with a lamellae filter device 6 as can best be seen in figure 2. The cyclone filter 1 as such corresponds to the filter as disclosed in international patent publication WO 2020/254446 A1.

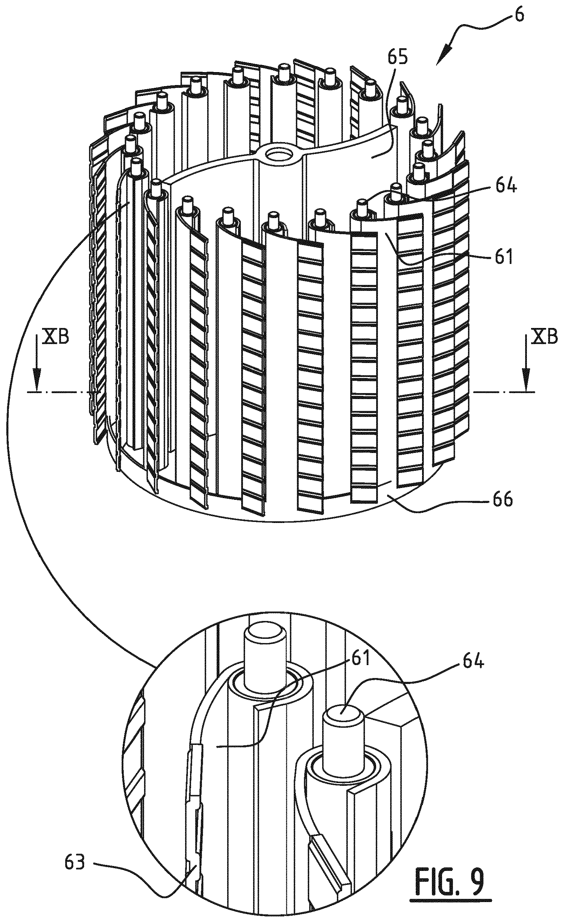

The filter 1 comprises an inlet 2 for liquid to be filtered, and an outlet 3 for filtered liquid. An outlet 4 is further provided to evacuate particles that have been filtered out of the liquid. An additional outlet 18 is provided to evacuate (larger) particles that have been blocked by an inlet sieve 7 (best seen in figure 9). Inlets 19 and 652 are provided to allow the inflow of fluid to flush the inlet sieve 7 and the lamellae filter 6, respectively. The body of the cyclone filter 10 comprises housing parts 101, 11, 12 which are connected using screws 13. Inlets and outlets 2, 3, 4, 18, 19, 652 are additionally provided with threading 21, 31, 41, 181, 191, 6521 respectively.

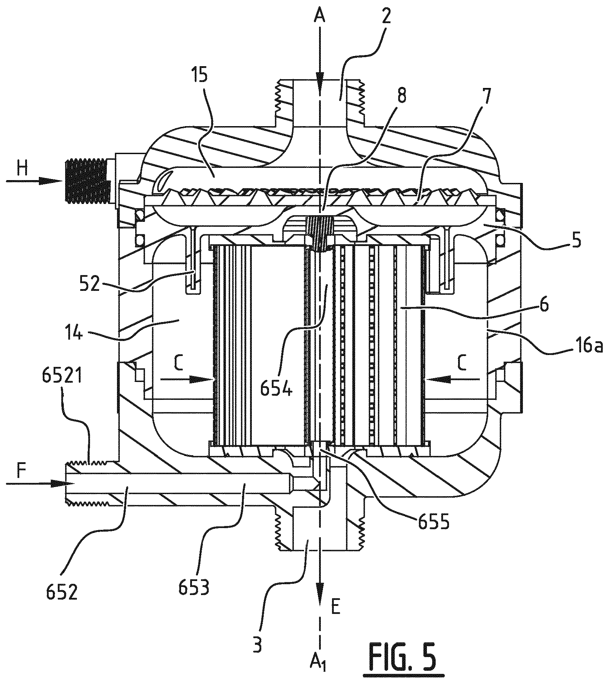

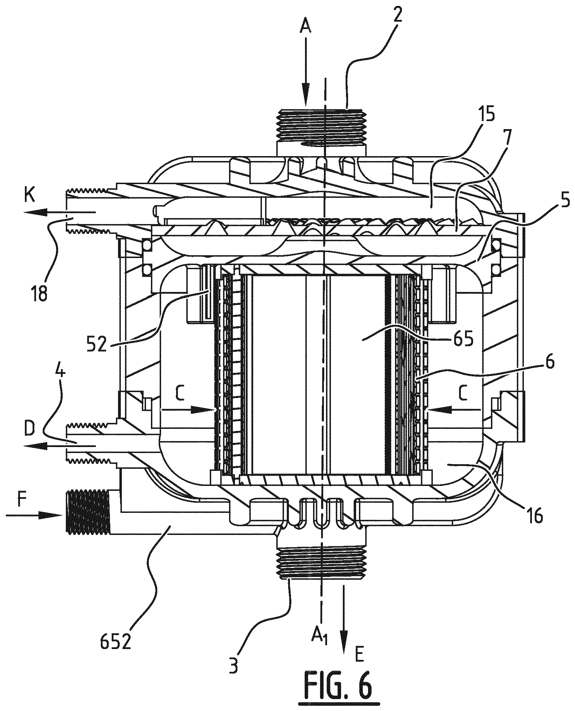

Also with reference to figures 5 and 6, the body of the cyclone filter 1 encloses a volume 14 which is divided into inlet chamber 15 and vortex chamber (alternatively fluid chamber) 16 by a wall member 5. Inlet chamber 15 further comprises inlet sieve 7, which serves to prevent particles above a certain size from flowing further into the cyclone filter. Inlet chamber 15 functions as buffer for liquid. The sieve 7 can be flushed by introducing liquid from the inlet 19, thereby dislodging any stuck particles. The liquid with dislodged particles can be output via outlet 18.

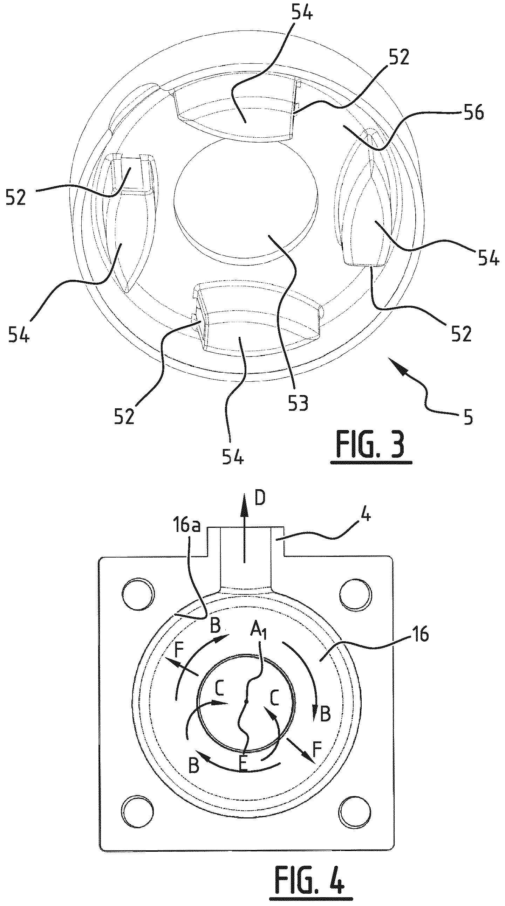

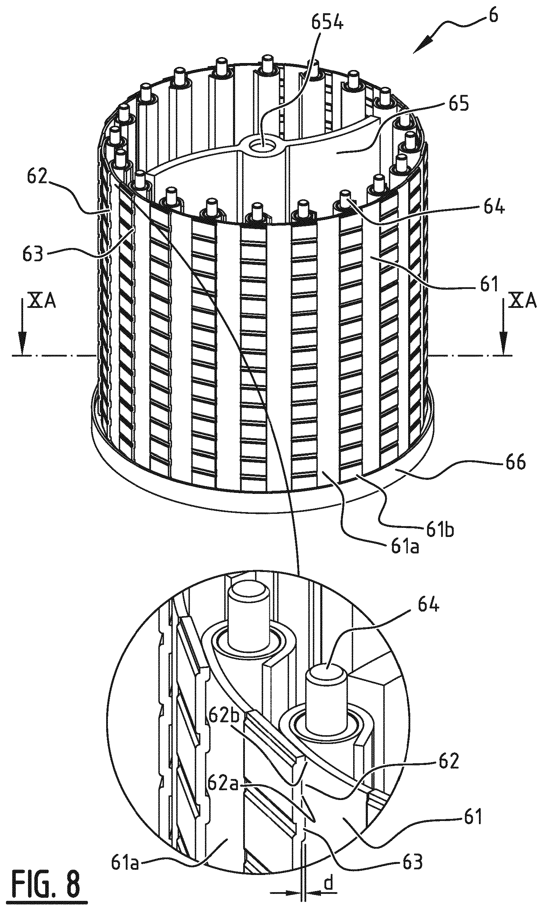

In the wall member 5, openings 51 are provided at regular intervals on a circle which form nozzles 54. Nozzles 54 have openings 52 which are oriented tangentially around a central axis A1 of the vortex chamber 16. Liquid coming into the inlet chamber 15, indicated with the arrow A in e.g. figure 8, will flow into openings 51 and exit nozzles 54 via openings 52 into the fluid chamber 16. A vortex, indicated with the arrows B in figure 4, will thus be created in the fluid chamber 16. The wall member 5 with the openings 51 and 52 are thus arranged to induce a vortex of liquid in the vortex chamber 16.

The fluid will revolve around a vortex axis, which coincides with the central axis A1 of the fluid chamber 16. The outlet 4 for particles is arranged at a location perpendicular to and away from the vortex axis A1 (see for instance figure 4). Through the centrifugal forces, particles will be urged away from the vortex axis A1 towards the inner side wall 16a of the fluid chamber 16. This is schematically indicated with the arrows F in figure 4. The outlet 4 is arranged in this inner side wall 16a, at least, the outlet 4 debouches in the fluid chamber 16 at the inner side wall 16a. As the particles move outwardly, liquid will move inwardly, indicated with arrows C, and is allowed to flow via the lamellae filter 6 into the outlet 3 for filtered fluid. To ensure that no remaining particles above a certain size remains in the liquid that flows into the outlet 3, the lamellae filter 6 is provided. Lamellae filter 6 is arranged between lower wall 16b of the fluid chamber 16 and the lower wall 5b (see figure 6) of the wall member 5. The outlet 3 is arranged inside the cylindrical lamellae filter 6.

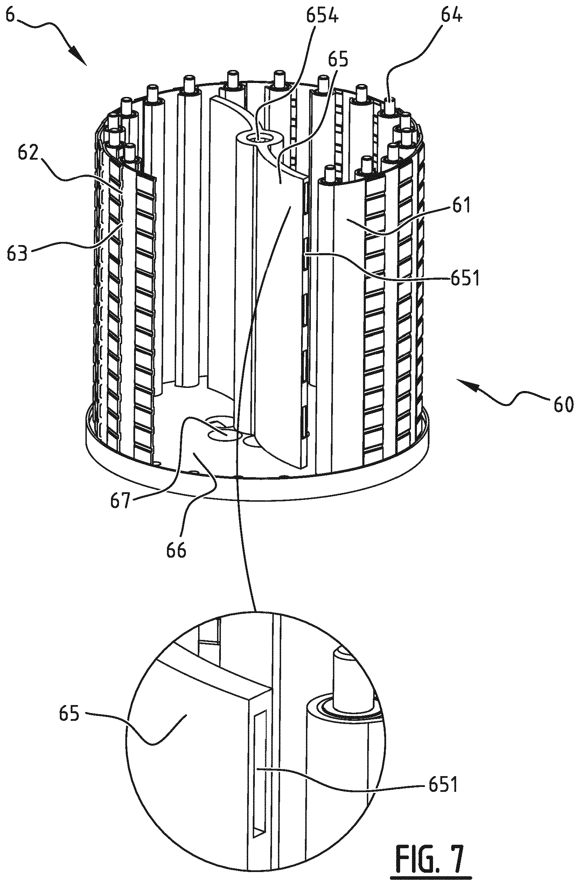

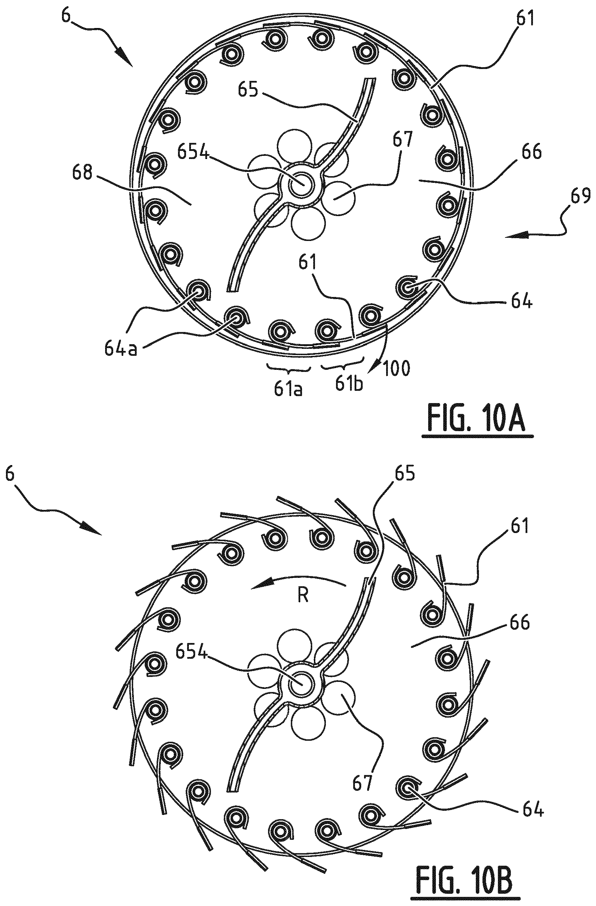

The lamellae filter 6 is shown in more detail in figures 7 - 10. The lamellae filter 6 comprises a plurality of lamellae 61 which are rotatably connected to axles 64. The axles 64 are mounted between two end plates 66. One of the endplates 66 is provided with outlets 67 which connect to outlet 3 to allow the outflow of filtered liquid. The lamellae 61 can be positioned in a closed (filtering) position, as seen in figure 7, 8 and 10a, and an open (flushing) position, as seen in figures 9 and 10b. In the filtering position, the lamellae 61 overlap, forming a filtering surface 60. By means of spacers 63 a plurality of filtering gaps 62 (see the detail in figure 8) is created. Fluid flows through the filtering gaps 62, thereby entrapping any particles larger than the filtering gaps 62.

A lamella 61 comprises a first edge region 61a and a second, opposite edge region 61b, wherein the second edge region 61b is provided with the spacers 63. The filtering gaps 62 are provided by pressing indentations 63. The distance between the offset surface 62a and the lower surface 62b of the lamella 61 then defines the filtering distance d. As the second edge region 61b will abut or overlap a first edge region 61a, a filtering gap 62 with filtering distance d is provided. The offset surface 62a is substantially planar, such that the filtering gap 62 is slot shaped. Instead of pressing the indentations 63, forming the gaps 62 therebetween, it is also possible to press out the surfaces 62a with respect to the lower surface 62b.

Inside the lamellae filter 6 a flushing device 65 may be provided. Flushing device 65 is rotatably mounted between endplates 66, and may rotate around an axis coinciding with axis A1. The flushing device 65 comprises an internal volume 654 which forms a flow path for flushing liquid from flushing device inlet 655 (see figure 5) to flushing nozzles 651 (see the detail of figure 7). Flushing device inlet 655 is provided on the rotation axis A1. A flushing fluid flow path 653 is provided in the cyclone filter device body 1 (see figure 5) that connects flushing inlet 652 to flushing device inlet 655. Nozzles 651 are oriented at an acute angle to a radial emanating from axis A1. As a consequence, fluid flowing out of nozzles 651 will generate a hydraulic force component tangential to a circle perpendicular to and centred on axis A1 that can induce a rotating motion of flushing device 65 in a direction R (see figure 10B).

The lamellae 61 are movable between a filtering position (figure 10A) and flushing position (10B) by rotating the lamellae 61 outwardly, indicated for one lamella 61 in figure 10A with arrow 100. A lamellae 61 is rotatable around a rotation axis 64a, here in the form of axles 64, parallel to the surface of the lamella 61. The rotation axis 54a extends near a long edge of the lamella 61.

Movement towards the flushing position as shown in figure 10B is achieved by providing a fluid flow from, or a pressure difference between, the outlet side 68 to the inlet side 69. This can be achieved by flushing device 65 as mentioned above and/or by reversing the fluid flow direction in the lamellae filter 6.

Moving the lamellae filter 6 back to the filtering position as shown in figure 10A can be achieved by providing a fluid flow from the inlet side 69 to the outlet side 68. The lamellae 61 will rotate back, until further movement is blocked by a first lamella abutting a second lamella. This is visible in the detail of figure 8. A second edge region 61b hereby abuts a first edge region 61a, which is coupled to the axle 64. Further rotation inwardly is thus prevented.

Through normal operation, fluid with suspended particles flows into inlet 1, is filtered by means of the cyclone filter and lamellae filter 6 and wherein filtered fluid then flows out of outlet 3. Particles accumulate at least on the inlet sieve 7, near the vortex chamber wall 16a and on the filtering surface 60 of lamellae filter 6. Means are provided to remove particles from each of these three areas.

To remove particles from inlet sieve 7, outlet 18 can be opened as mentioned above, and optionally outlet 3 can be closed. This allows fluid flowing into the inlet chamber 15 through inlet 2 in direction A to entrain particles entrapped in inlet chamber 15 and on the inlet sieve 7, and flush them through outlet 18 in direction K. Optionally, fluid can also be induced to flow into inlet chamber 15 in direction H through inlet 19. This fluid then entrains any particles entrapped in the inlet chamber 15 and on inlet sieve 7. The entrained particles are then flushed out of the inlet chamber 15 through outlet 18.

To remove particles from vortex chamber 16, outlet 4 can be opened, and optionally outlet 3 can be closed. This allows fluid flowing into the vortex chamber from inlet 2 to entrain any particles accumulated on vortex chamber wall 16a and vortex chamber 16 and to flush these particles out of the cyclone filter in direction D through outlet 4.

Particles accumulated on filter 6 may be flushed by first closing, if opened, inlets 2 and 19 and outlets 3 and 18. Subsequently inlet 652 and outlet 4 are opened if they were closed. The flushing fluid flowing through inlet 652, the flushing device 65 and nozzles 651 will generate hydraulic pressure, thereby rotating flushing device 65 and pushing open lamellae 61, see figure 9. The flushing fluid will then flush any particles from lamellae 61 and flow out of the cyclone filter through outlet 4 in direction D. Once flushing is complete, inlet 652 is closed. To resume normal operation of the cyclone filter, inlet 2 is opened. The hydraulic pressure generated by the fluid flowing through the open lamellae 65 will push the lamellae into the filtering position. The fluid will flow out of outlet 4 in direction D. Once the lamellae are closed, outlet 3 is opened and outlet 4 is closed. The cyclone filter will now operate normally, where fluid flows into the cyclone filter through inlet 2, then through the filtering gaps 63 between the lamellae 61. Filtered fluid then flows out of outlet 3.

Under normal operation, inlets 19 and 652 and outlets 4 and 18 are closed. As part of any of the three flushing operations mentioned above, outlet 3 can be closed to increase fluid pressure in the fluid chambers, thereby increasing the efficacy of the flushing operations.

## Claims

1. Filtering device (6) for removing particles from a liquid, wherein the filtering device (6) comprises a liquid inlet side (69) and a filtered liquid outlet side (68), **characterized in that** the filtering device (6) is substantially cylindrical, wherein the filtering device (6) comprises a plurality of lamellae (61), wherein the lamellae (61) are rotatable between a filtering position, wherein adjacent lamellae (61) extend at a filtering distance (d) for defining a substantially cylindrical filtering surface (60) wherein the lamellae (61) extend substantially parallel to the cylindrical filtering surface (60), and a flushing position wherein adjacent lamellae (61) are rotated in a direction radially outwardly and extend at a mutual distance larger than the filtering distance (d).

2. Filtering device according to claim 1, wherein in the filtering position, adjacent lamellae (61) partly overlap.

3. Filtering device according to claim 2, wherein the lamellae (61) are provided with spacers (63) for keeping the partly overlapping lamellae (61) at the filtering distance (d) in the filtering position.

4. Filtering device according to claim 3, wherein the wherein the spacers (63) comprise indentations (63) in the lamellae (61) with a depth corresponding to the filtering distance (d), wherein the indentations (63) are formed by deforming the surface of the lamella (61) by means of pressing or machining.

5. Filtering device according to any of the preceding claims, wherein the filtering device (6) comprises two end surfaces (66) wherein the plurality of lamellae (61) extend between the end surfaces (66) for forming the cylindrical surface (60) in the filtering position, wherein an outlet (67) is provided in at least one of the two end surfaces (66), wherein the filtering device (6) further preferably comprises a plurality of rotation axles (64) extending between the two end surfaces (66), wherein the lamellae (61) are arranged to rotate about said rotation axles (64).

6. Filtering device according to any of the preceding claims, further comprising a flushing device (65) comprising one or more nozzles (651) arranged to direct a flow of fluid from the filtered liquid outlet side towards the lamellae (61).

7. Filtering device according to claim 6, wherein the flushing device (65) is rotatably arranged in the cylindrical filtering device (6).

8. Filtering device according to claim 7, wherein the one or more flushing nozzles (651) are oriented in a direction having a component perpendicular to the radial direction of the cylindrical filtering device (6).

9. Filtering device according to at least claims 5 and 6, wherein the filtering device (6) compromises a flushing inlet (652) coupled to the flushing device (65), wherein the flushing inlet (652) is provided in at least one of the two end surfaces (66).

10. Cyclone filter (1) for removing particles from a liquid, wherein the cyclone filter comprises a fluid chamber (16) and an inlet for liquid (2), an outlet for filtered liquid (3) and an outlet for particles (4), each coupled to the fluid chamber (16), wherein the cyclone filter (1) further comprises a flow directing mechanism for inducing a vortex flow around a vortex axis A1 in said fluid chamber (16), wherein the fluid chamber (16) comprises a filtering device (6) according to any of the preceding claims, wherein the lamellae (61) are rotatable from the filtering position to the flushing position in a direction opposite the vortex flow in said fluid chamber (16).

11. Method for filtering a liquid using a filtering device (6) according to any of the preceding claims 1 to 9, comprising inducing a liquid flow from the liquid inlet side (69) to the filtered liquid outlet side (68).

12. Method for flushing a filtering device (6) according to any of the preceding claims 1 to 9 comprising the steps of:
- moving the lamellae (61) from the filtering position, wherein adjacent lamellae (61) extend at the filtering distance (d) for defining the filtering surface (60), to the flushing position wherein adjacent lamellae (61) extend at a mutual distance larger than the filtering distance (d);
- inducing a liquid flow from the filtered liquid outlet side (68) to the liquid inlet side (69).

13. Method according to claim 12, wherein the step of moving the lamellae (61) from the filtering position to the flushing position comprises inducing the liquid flow from the filtered liquid outlet side (68) to the liquid inlet side (69) using a flushing device (65) according to any of the claims 6-9.

14. Method according to claim 13, wherein the filtering device (6) is substantially cylindrical, wherein in the filtering position, the filtering surface (60) is substantially cylindrical, wherein the lamellae (61) are rotatable between the filtering position wherein the lamellae (61) extend substantially parallel to the cylindrical surface (60) and the flushing position wherein the lamellae (61) are rotated in a direction radially outwardly, wherein the further comprises the step of rotating the flushing device (65).

## Patentansprüche

1. Filtervorrichtung (6) zum Entfernen von Partikeln aus einer Flüssigkeit, wobei die Filtervorrichtung (6) eine Einlassseite (69) für Flüssigkeit und eine Auslassseite (68) für gefilterte Flüssigkeit umfasst,
**dadurch gekennzeichnet, dass** die Filtervorrichtung (6) im Wesentlichen zylindrisch ist, wobei die Filtervorrichtung (6) eine Vielzahl von Lamellen (61) umfasst, wobei die Lamellen (61) drehbar sind zwischen einer Filterposition, wobei sich angrenzende Lamellen (61) in einem Filterabstand (d) erstrecken zum Definieren einer im Wesentlichen zylindrischen Filteroberfläche (60), wobei sich die Lamellen (61) im Wesentlichen parallel zu der zylindrischen Filteroberfläche (60) erstrecken, und einer Spülposition, wobei angrenzende Lamellen (61) in einer Richtung radial nach außen gedreht sind und sich in einem gegenseitigen Abstand erstrecken, der größer als der Filterabstand (d) ist.

2. Filtervorrichtung nach Anspruch 1, wobei sich in der Filterposition angrenzende Lamellen (61) teilweise überlappen.

3. Filtervorrichtung nach Anspruch 2, wobei die Lamellen (61) mit Abstandshaltern (63) versehen sind, um die sich teilweise überlappenden Lamellen (61) in dem Filterabstand (d) in der Filterposition zu halten.

4. Filtervorrichtung nach Anspruch 3, wobei die Abstandshalter (63) Vertiefungen (63) in den Lamellen (61) mit einer Tiefe entsprechend dem Filterabstand (d) umfassen, wobei die Vertiefungen (63) durch ein Verformen der Oberfläche der Lamelle (61) mittels eines Pressens oder eines maschinellen Ausarbeitens ausgebildet werden.

5. Filtervorrichtung nach einem der vorstehenden Ansprüche, wobei die Filtervorrichtung (6) zwei Endoberflächen (66) umfasst, wobei sich die Vielzahl von Lamellen (61) zwischen den Endoberflächen (66) zum Ausbilden der zylindrischen Oberfläche (60) in der Filterposition erstreckt, wobei ein Auslass (67) in mindestens einer der zwei Endoberflächen (66) bereitgestellt ist, wobei die Filtervorrichtung (6) weiter bevorzugt eine Vielzahl von Drehachsen (64) umfasst, die sich zwischen den zwei Endoberflächen (66) erstrecken, wobei die Lamellen (61) angeordnet sind, um sich um die Drehachsen (64) zu drehen.

6. Filtervorrichtung nach einem der vorstehenden Ansprüche, ferner umfassend eine Spülvorrichtung (65), umfassend eine oder mehrere Düsen (651), die angeordnet sind, um eine Fluidströmung von der Auslassseite der gefilterten Flüssigkeit zu den Lamellen (61) zu leiten.

7. Filtervorrichtung nach Anspruch 6, wobei die Spülvorrichtung (65) in der zylindrischen Filtervorrichtung (6) drehbar angeordnet ist.

8. Filtervorrichtung nach Anspruch 7, wobei die eine oder die mehreren Spüldüsen (651) in einer Richtung ausgerichtet sind, die eine Komponente senkrecht zu der radialen Richtung der zylindrischen Filtervorrichtung (6) aufweist.

9. Filtervorrichtung nach mindestens den Ansprüchen 5 und 6, wobei die Filtervorrichtung (6) einen Spüleinlass (652) umfasst, der an die Spülvorrichtung (65) gekoppelt ist, wobei der Spüleinlass (652) in mindestens einer der zwei Endoberflächen (66) bereitgestellt ist.

10. Zyklonfilter (1) zum Entfernen von Partikeln aus einer Flüssigkeit, wobei der Zyklonfilter eine Fluidkammer (16) und einen Einlass für Flüssigkeit (2), einen Auslass für gefilterte Flüssigkeit (3) und einen Auslass für Partikel (4) umfasst, die jeweils an die Fluidkammer (16) gekoppelt sind, wobei der Zyklonfilter (1) ferner einen Strömungsleitungsmechanismus zum Induzieren einer Wirbelströmung um eine Wirbelachse A1 in der Fluidkammer (16) umfasst, wobei die Fluidkammer (16) eine Filtervorrichtung (6) nach einem der vorstehenden Ansprüche umfasst, wobei die Lamellen (61) von der Filterposition zu der Spülposition in einer Richtung entgegengesetzt zu der Wirbelströmung in der Fluidkammer (16) drehbar sind.

11. Verfahren zum Filtern einer Flüssigkeit unter Verwendung einer Filtervorrichtung (6) nach einem der vorstehenden Ansprüche 1 bis 9, umfassend das Induzieren einer Flüssigkeitsströmung von der Einlassseite (69) für Flüssigkeit zu der Auslassseite (68) für gefilterte Flüssigkeit.

12. Verfahren zum Spülen einer Filtervorrichtung (6) nach einem der vorstehenden Ansprüche 1 bis 9, umfassend die Schritte:
- Bewegen der Lamellen (61) von der Filterposition, wobei sich angrenzende Lamellen (61) in dem Filterabstand (d) zum Definieren der Filteroberfläche (60) erstrecken, in die Spülposition, wobei sich angrenzende Lamellen (61) in einem gegenseitigen Abstand erstrecken, der größer als der Filterabstand (d) ist;
- Induzieren einer Flüssigkeitsströmung von der Auslassseite (68) für gefilterte Flüssigkeit zu der Einlassseite (69) für Flüssigkeit.

13. Verfahren nach Anspruch 12, wobei der Schritt des Bewegens der Lamellen (61) von der Filterposition in die Spülposition das Induzieren der Flüssigkeitsströmung von der Auslassseite (68) für gefilterte Flüssigkeit zu der Einlassseite (69) für Flüssigkeit unter Verwendung einer Spülvorrichtung (65) nach einem der Ansprüche 6 bis 9 umfasst.

14. Verfahren nach Anspruch 13, wobei die Filtervorrichtung (6) im Wesentlichen zylindrisch ist, wobei in der Filterposition die Filteroberfläche (60) im Wesentlichen zylindrisch ist, wobei die Lamellen (61) drehbar sind zwischen der Filterposition, wobei sich die Lamellen (61) im Wesentlichen parallel zu der zylindrischen Oberfläche (60) erstrecken, und der Spülposition, wobei die Lamellen (61) in einer Richtung radial nach außen gedreht sind, wobei das Weitere den Schritt des Drehens der Spülvorrichtung (65) umfasst.

## Revendications

1. Dispositif de filtrage (6) destiné à éliminer des particules d'un liquide, dans lequel le dispositif de filtrage (6) comprend un côté entrée de liquide (69) et un côté sortie de liquide filtré (68), **caractérisé en ce que** le dispositif de filtrage (6) est sensiblement cylindrique, dans lequel le dispositif de filtrage (6) comprend une pluralité de lamelles (61), les lamelles (61) pouvant tourner entre une position de filtrage, dans lequel les lamelles adjacentes (61) s'étendent à une distance de filtrage (d) pour définir une surface de filtrage sensiblement cylindrique (60), les lamelles (61) s'étendant sensiblement parallèlement à la surface de filtrage cylindrique (60), et une position de rinçage dans laquelle les lamelles adjacentes (61) sont tournées dans une direction radialement vers l'extérieur et s'étendent à une distance mutuelle supérieure à la distance de filtrage (d).

2. Dispositif de filtrage selon la revendication 1, dans lequel, dans la position de filtrage, les lamelles adjacentes (61) se chevauchent partiellement.

3. Dispositif de filtrage selon la revendication 2, dans lequel les lamelles (61) sont pourvues d'entretoises (63) pour maintenir les lamelles (61) qui se chevauchent partiellement à la distance de filtrage (d) dans la position de filtrage.

4. Dispositif de filtrage selon la revendication 3, dans lequel les entretoises (63) comprennent des indentations (63) dans les lamelles (61) d'une profondeur correspondant à la distance de filtrage (d), les indentations (63) étant formées en déformant la surface de la lamelle (61) par pressage ou usinage.

5. Dispositif de filtrage selon l'une quelconque des revendications précédentes, dans lequel le dispositif de filtrage (6) comprend deux surfaces d'extrémité (66) dans lesquelles la pluralité de lamelles (61) s'étendent entre les surfaces d'extrémité (66) pour former la surface cylindrique (60) dans la position de filtrage, dans lequel une sortie (67) est prévue dans au moins l'une des deux surfaces d'extrémité (66), dans lequel le dispositif de filtrage (6) comprend en outre de préférence une pluralité d'axes de rotation (64) s'étendant entre les deux surfaces d'extrémité (66), dans lequel les lamelles (61) sont agencées pour tourner autour desdits axes de rotation (64).

6. Dispositif de filtrage selon l'une quelconque des revendications précédentes, comprenant en outre un dispositif de rinçage (65) comprenant une ou plusieurs buses (651) agencées pour diriger un écoulement de fluide depuis le côté sortie du liquide filtré vers les lamelles (61).

7. Dispositif de filtrage selon la revendication 6, dans lequel le dispositif de rinçage (65) est agencé de manière rotative dans le dispositif de filtrage cylindrique (6).

8. Dispositif de filtrage selon la revendication 7, dans lequel la ou les buses de rinçage (651) sont orientées dans une direction ayant une composante perpendiculaire à la direction radiale du dispositif de filtrage cylindrique (6).

9. Dispositif de filtrage selon au moins les revendications 5 et 6, dans lequel le dispositif de filtrage (6) comprend une entrée de rinçage (652) couplée au dispositif de rinçage (65), dans lequel l'entrée de rinçage (652) est prévue dans au moins l'une des deux surfaces d'extrémité (66).

10. Filtre cyclone (1) pour éliminer des particules d'un liquide, dans lequel le filtre cyclone comprend une chambre à fluide (16) et une entrée pour le liquide (2), une sortie pour le liquide filtré (3) et une sortie pour les particules (4), chacune étant couplée à la chambre à fluide (16), dans lequel le filtre cyclone (1) comprend en outre un mécanisme de direction d'écoulement pour induire un écoulement tourbillonnaire autour d'un axe tourbillonnaire A1 dans ladite chambre à fluide (16), dans lequel la chambre à fluide (16) comprend un dispositif de filtrage (6) selon l'une quelconque des revendications précédentes, dans lequel les lamelles (61) peuvent tourner de la position de filtrage à la position de rinçage dans une direction opposée à l'écoulement tourbillonnaire dans ladite chambre à fluide (16).

11. Procédé de Procédé de filtrage d'un liquide à l'aide d'un dispositif de filtrage (6) selon l'une quelconque des revendications 1 à 9 précédentes, comprenant l'induction d'un écoulement de liquide du côté entrée de liquide (69) vers le côté sortie de liquide filtré (68).

12. Procédé de rinçage d'un dispositif de filtrage (6) selon l'une quelconque des revendications 1 à 9 précédentes, comprenant les étapes suivantes :
- déplacer les lamelles (61) de la position de filtrage, dans laquelle les lamelles adjacentes (61) s'étendent à la distance de filtrage (d) pour définir la surface de filtrage (60), à la position de rinçage dans laquelle les lamelles adjacentes (61) s'étendent à une distance mutuelle plus grande que la distance de filtrage (d) ;
- induire un flux de liquide du côté de la sortie du liquide filtré (68) vers le côté de l'entrée du liquide (69).

13. Procédé selon la revendication 12, dans lequel l'étape consistant à déplacer les lamelles (61) de la position de filtrage à la position de rinçage comprend l'induction du flux de liquide depuis le côté sortie du liquide filtré (68) vers le côté entrée du liquide (69) à l'aide d'un dispositif de rinçage (65) selon l'une quelconque des revendications 6 à 9.

14. Procédé selon la revendication 13, dans lequel le dispositif de filtrage (6) est sensiblement cylindrique, dans lequel en position de filtrage, la surface de filtrage (60) est sensiblement cylindrique, dans lequel les lamelles (61) sont rotatives entre la position de filtrage dans laquelle les lamelles (61) s'étendent sensiblement parallèlement à la surface cylindrique (60) et la position de rinçage dans laquelle les lamelles (61) sont tournées dans une direction radiale vers l'extérieur, dans lequel le procédé comprend en outre l'étape consistant à faire tourner le dispositif de rinçage (65).
